# EUROPEAN PATENT APPLICATION

(11) **EP 4 653 291 A1**
(43) Date of publication of application: **26.11.2025**
(21) Application number: 25174591.5
(22) Date of filing: 06.05.2025
(51) Int. Cl.: B62D 15/02, B60W 30/06, G08G 1/16

(54) **REMOTE DRIVING CONTROL APPARATUS AND REMOTE OPERATION APPARATUS**

(30) Priority: 22.05.2024 JP 2024083222
(71) Applicant: TOYOTA JIDOSHA KABUSHIKI KAISHA, Toyota-shi Aichi 471-8571 (JP)
(72) Inventor: WANG, Chenyang, TOYOTA-SHI, AICHI, 471-8571 (JP)
(74) Representative: Cabinet Beau de Loménie

(57) **Abstract**

A remote driving control apparatus (10) executes a remote driving control for driving a vehicle to a target space according to a driving instruction from a remote operation apparatus (20) operated by a user outside the vehicle. The remote driving control apparatus (10) displays a control screen including information about the remote driving control on a display device (66) of the remote operation apparatus (20), and changes content of the control screen according to a progress of the remote driving control.

## Description

### TECHNICAL FIELD

The present invention relates to a remote driving control apparatus configured to execute a remote driving control for driving a vehicle to a target space according to a driving instruction from a remote operation apparatus operated by a user outside the vehicle, and the remote operation apparatus configured to be operated by the user outside the vehicle in order to drive the vehicle to the target space.

### BACKGROUND

Conventionally, there has been known a remote driving control apparatus configured to execute a remote driving control. For example, a remote driving control apparatus described in Patent Document 1 (hereinafter referred to as a "conventional apparatus") executes a remote parking control for parking the vehicle in a target space based on an operation on a remote operation apparatus by a user outside the vehicle. While the conventional apparatus is executing the remote parking control, the conventional apparatus causes the remote operation apparatus to display a remote parking screen as a control screen. The remote parking screen includes an image of a scenery of a blind area on the opposite side of the user with reference to the vehicle and in a direction of the user's line of sight when the user looks at the vehicle.

Patent Document 1: Japanese Patent Application Laid-Open No. 2021-160499

### SUMMARY

An approach possibility that the vehicle approaches to an obstacle changes depending on a progress of the remote driving control. Request Information about the remote driving control that the user wants to (requests to) know changes depending on the approach possibility. In other words, the request information changes depending on the progress of the remote driving control.

For example, in the remote parking control, the approach possibility of a parking phase in which the vehicle actually parks in a parking space is higher than the approach possibility of a start phase in which the remote parking control starts. For example, the user tends to request to know a positional relationship between the vehicle and the obstacle when the approach possibility is high. The user tends to request to know the progress of the remote driving control when the approach possibility is low.

If the request information of when the approach possibility is high and the request information of when the approach possibility is low are displayed on the control screen at the same time, the control screen becomes complicated. There is a high possibility that the user finds it inconvenient to look at the control screen. If only the request information of when the approach possibility is high is displayed on the control screen, the user cannot know the request information of when the approach possibility is low.

The present invention is made to address the above problem. That is, one of the objects of the present invention is to provide the remote driving control apparatus that can display the information which the user wants to know on the control screen.

A remote driving control apparatus according to the present invention (hereinafter, referred to as "the present invention apparatus") is configured to execute a remote driving control for driving a vehicle to a target space according to a driving instruction from a remote operation apparatus operated by a user outside the vehicle ,
wherein,
the remote driving control apparatus is configured to:
display a control screen including information about the remote driving control on a display device of the remote operation apparatus when the remote driving control is executed , and
change content of the control screen according to a progress of the remote driving control .

According to the present invention apparatus, the content of the control screen changes according to the progress of the remote driving control. This enables the present invention apparatus to display, on the display device, the control screen including the request information which the user wants to know according to the progress of the remote driving control. The request information changes according to the progress of the remote driving control. Therefore, it is possible to provide the remote driving control apparatus that can display on the control screen the information that the user wants to know while avoiding making the control screen too complicated.

In one aspect of the present invention apparatus, the present invention apparatus is configured to drive the vehicle along a route to the target space in the remote driving control . The route is divided into a first zone where an approach possibility that the vehicle approaches an obstacle is low and a second zone where the approach possibility is high at a switching position. Furthermore, the present invention apparatus is configured to display a first control screen as the control screen on the display device , when the vehicle travels in the first zone, and display a second control screen which varies from the first control screen as the control screen on the display device , when the vehicle travels in the second zone .

According to the present aspect, the first control screen is displayed when the vehicle travels in the first zone where the approach possibility is low, and the second control screen is displayed when the vehicle travels in the second zone where the approach possibility is high. This allows the control screen to be varied (changed) according to the approach possibility.

In the aspect, the present invention apparatus is configured to:
display the first control screen including a progress information that represents a progress of the remote driving control , when the vehicle travels in the first zone ; and
display the second control screen including an alerting information that alerts a driver to the obstacle whose distance to the vehicle is equal to or shorter than a threshold distance , when the vehicle travels in the second zone .

The user tends to want to know the progress of the remote driving control when the approach possibility is low, and the user tends to want to know a position of the obstacle when the approach possibility is high. According to the present aspect, the progress information is displayed when the vehicle travels in the first zone, and the alerting information is displayed when the vehicle travels in the second zone. The information that the user wants to know is displayed according to the approach possibility, so the user can know the information that the user wants to know.

In the aspect, the present invention apparatus is configured to display the first control screen including at least one of a route information and a remaining distance information as the progress information.

The route information represents a traveled route that the vehicle has already traveled and an untraveled route that the vehicle has not traveled yet.

The remaining distance information represents a remaining distance to the target space.

When the vehicle travels in the first zone, the user can know at least one of the route information and the remaining distance information, so the user can know the progress of the remote driving control.

In the aspect, the present invention apparatus is configured to display the alerting information superimposed on an overhead image of an area around the vehicle in the second control screen.

When the vehicle travels in the second zone, the user can know the position of the obstacle around the vehicle.

In the aspect, the present invention apparatus is configured to:
execute, as the remote driving control, a moving control for moving the vehicle to a vicinity of the target space before the vehicle reaches the switching position ;
execute, as the remote driving control, a parking control for parking the vehicle in the target space after the vehicle reaches the switching position ;
determine that the vehicle travels in the first zone when the moving control is executed; and
determine that the vehicle travels in the second zone when the parking control is executed.

In general, the approach possibility is low when the moving control is executed, and the approach possibility is high when the parking control is executed. According to the present aspect, it is determined that the vehicle travels in the first zone when the moving control is executed, and it is determined that the vehicle travels in the second zone when the parking control is executed. As a result, the present invention apparatus can accurately determine the approach possibility based on the progress of the remote driving control.

In the aspect, the present invention apparatus is configured to drive the vehicle such that a vehicle speed does not exceed a limit vehicle speed , when the remote driving control is executed.

The limit vehicle speed of the parking control is set to a lower value than the limit vehicle speed of the moving control .

According to the present aspect, the limit vehicle speed of the parking control is set to the lower value than the limit vehicle speed of the moving control. As a result, in the parking control, the vehicle can stop immediately when a collision possibility that the vehicle contacts with the obstacle is high. Furthermore, the present invention apparatus can reduce a time taken for the vehicle to move during the moving control.

In the aspect, the present invention apparatus is configured to:
execute, as the remote driving control, a leaving control for leaving the vehicle from a parking space from a time at which the remote driving control starts to a time at which the vehicle reaches the switching position ;
execute, as the remote driving control, a moving control for moving the vehicle to the target space after the vehicle reaches the switching position ;
determine that the vehicle travels in the second zone when the leaving control is executed; and
determine that the vehicle travels in the first zone when the moving control is executed.

In general, the approach possibility is low when the moving control is executed, and the approach possibility is high when the leaving control is executed. According to the present aspect, it is determined that the vehicle travels in the first zone when the moving control is executed, and it is determined that the vehicle travels in the second zone when the leaving control is executed. As a result, the present invention apparatus can accurately determine the approach possibility based on the progress of the remote driving control.

In the aspect, the present invention apparatus is configured to drive the vehicle such that a vehicle speed does not exceed a limit vehicle speed , when the remote driving control is executed.

The limit vehicle speed of the leaving control is set to a lower value than the limit vehicle speed of the moving control .

According to the present aspect, the limit vehicle speed of the leaving control is set to the lower value than the limit vehicle speed of the moving control. As a result, in the leaving control, the vehicle can stop immediately when the collision possibility is high. Furthermore, the present invention apparatus can reduce the time taken for the vehicle to move during the moving control.

A remote operation apparatus according to the present invention is configured to transmit a driving instruction to the vehicle when a user outside the vehicle operates the remote operation apparatus .

The vehicle executes a remote driving control for traveling to a target space according to the driving instruction .

The remote operation apparatus is configured to:
display a control screen including information about the remote driving control on a display device of the remote operation apparatus, when the vehicle executes the remote driving control; and
change content of the control screen according to a progress of the remote driving control.

According to the remote operation apparatus according to the present invention, the content of the control screen changes according to the progress of the remote driving control. This enables the remote operation apparatus to display on the display device the control screen including the request information which the user wants to know according to the progress of the remote driving control. The request information changes according to the progress of the remote driving control.

### BRIEF DESCRIPTION OF THE DRAWINGS

FIG. 1 is a schematic system configuration diagram of a vehicle control system according to an embodiment of the present invention.
FIG. 2 is a drawing for illustrating a progress screen displayed on a display device of a remote operation apparatus shown in FIG. 1.
FIG. 3 is a drawing for illustrating an obstacle screen displayed on the display device of the remote operation apparatus shown in FIG. 1.
FIG. 4 is a sequence diagram for illustrating an operation example of the vehicle control system according to the embodiment of the present invention.
FIG. 5 is a flowchart illustrating a start determination routine executed by a CPU of an ECU shown in FIG. 1.
FIG. 6 is a flowchart illustrating a remote parking control routine executed by the CPU of the ECU shown in FIG. 1.
FIG. 7 is a flowchart illustrating a remote leaving control routine executed by the CPU of the ECU shown in FIG. 1.
FIG. 8 is a flowchart illustrating a screen display routine executed by a CPU of a control unit shown in FIG. 1.

### DETAILED DESCRIPTION

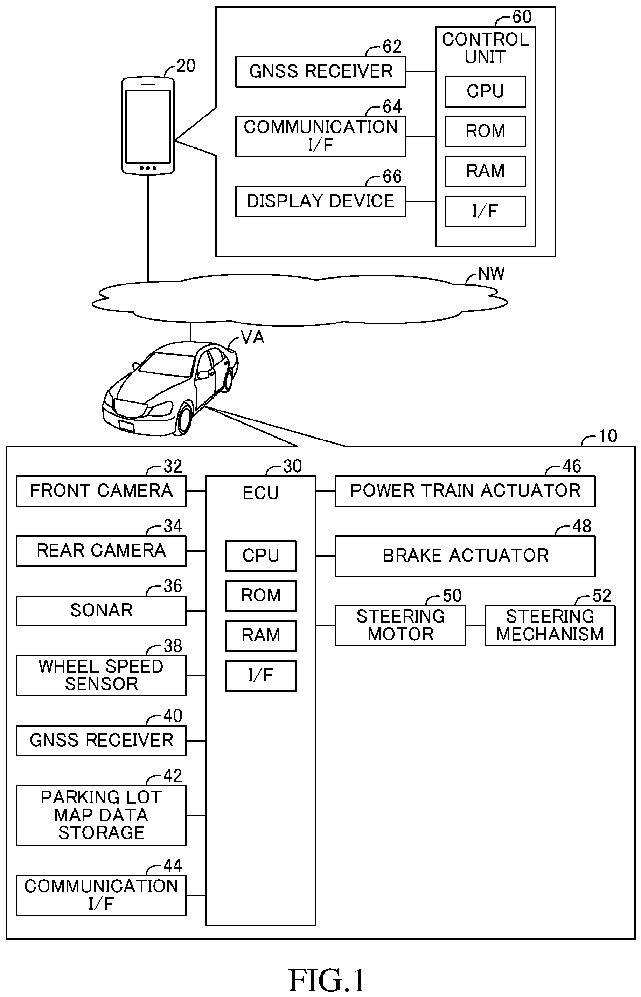

As shown in FIG. 1, a vehicle control system according to the present embodiment comprises a remote driving control apparatus 10 and a remote operation apparatus 20. The remote driving control apparatus 10 is applied to a vehicle VA. The remote driving control apparatus 10 is communicably connected to the remote operation apparatus 20 via a network NW.

A remote driving control apparatus 10 comprises components shown in FIG. 1. In this specification, an "ECU 30" is an electronic control unit with a microcomputer as a major part. The ECU 30 is also referred to as a control unit, a controller and a computer. The microcomputer includes a CPU (processor), a ROM, a RAM and an interface (I/F), etc. Functions realized by the ECU 30 may be realized by multiple ECUs.

A front camera 32 acquires a front image by capturing a scenery in front of the vehicle VA. A rear camera 34 acquires a rear image by capturing a scenery behind the vehicle VA. A sonar 36 acquires sonar data regarding a position of an object around the vehicle VA relative to the vehicle VA. The ECU 30 acquires the front image and the rear image from the front camera 32 and the rear camera 34, respectively, and acquires the sonar data from the sonar 36. The ECU 30 recognizes the object around the vehicle VA based on the front image, the rear image and the sonar data.

A wheel speed sensor 38 generates one pulse signal each time a wheel of the vehicle VA rotates a predetermined angle. The ECU 30 counts the number of the pulse signals generated by the wheel speed sensor 38 per unit time and acquires a vehicle speed Vs, which represents a speed of the vehicle VA, based on the number of the pulse signals measured.

A GNSS (Global Navigation Satellite System) receiver 40 receives signals from multiple satellites and identifies the current position (latitude and longitude) of the vehicle VA based on the received signals. A parking lot map data storage 42 stores parking lot map data of at least one of a parking lot. A communication interface (I/F) 44 is an interface for connecting the remote driving control apparatus 10 to the network NW.

A power train actuator 46 changes a driving force generated by a driving device (e.g., an internal combustion engine and/or an electric motor) of the vehicle VA. A brake actuator 48 changes a braking force applied to the vehicle VA. A steering motor 50 is installed in a steering mechanism 52. The steering mechanism 52 is a mechanism for turning steered wheels in response to an operation of a steering wheel. The steering motor 50 generates an automatic steering torque to change a steered angle of the steered wheels of the vehicle VA in response to an instruction from the ECU 30.

The remote operation apparatus 20 is an apparatus that the user can operate even when the user is outside the vehicle VA. For example, the remote operation apparatus 20 is a smartphone. The remote operation apparatus 20 comprises components shown in FIG. 1.

A control unit includes a CPU (processor), a ROM, a RAM and an interface (I/F), etc. A GNSS receiver 62 and a communication I/F 64 are the same as the GNSS receiver 40 and the communication I/F 44, respectively. The explanations of these are omitted.

A display device 66 is a touch panel display that allows the user to input data to the remote operation apparatus 20 by touching the display device 66. If the display device 66 is not the touch panel display, the remote operation apparatus 20 comprises an input device not shown.

### (Outline of operation)

When the user outside the vehicle VA operates the remote operation apparatus 20, the remote operation apparatus 20 transmits a driving instruction. The remote driving control apparatus 10 executes a remote driving control for automatically driving the vehicle VA to the target space according to the driving instruction. For example, a smart summon and a reverse summon are known as the remote driving control.

The smart summon is a type of a remote leaving control. In the smart summon, the vehicle VA automatically drives from a parking space where the vehicle VA was parked to a target space. The target space is the current position of the remote operation apparatus 20 identified by the GNSS receiver 62, or a designated position designated by the user. The reverse summon is a type of a remote parking control. In the reverse summon, when the user gets out of the vehicle VA at an entrance of the parking lot, etc., and operates the remote operation apparatus 20, the vehicle VA parks in the parking space (the target space) designated by the user.

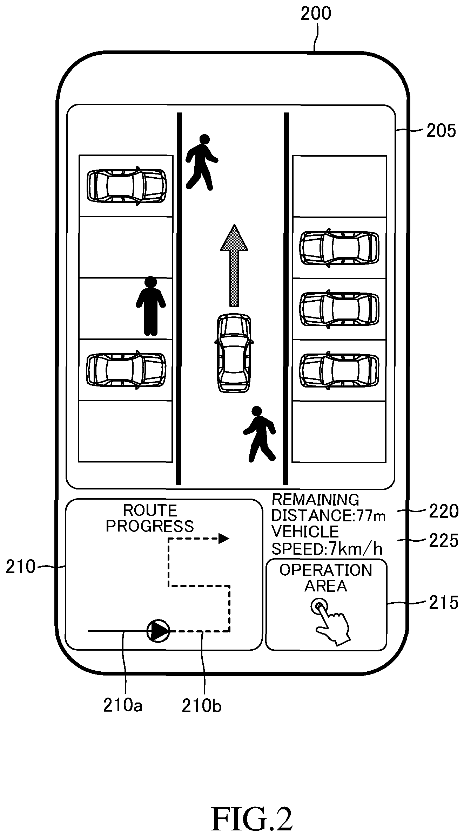

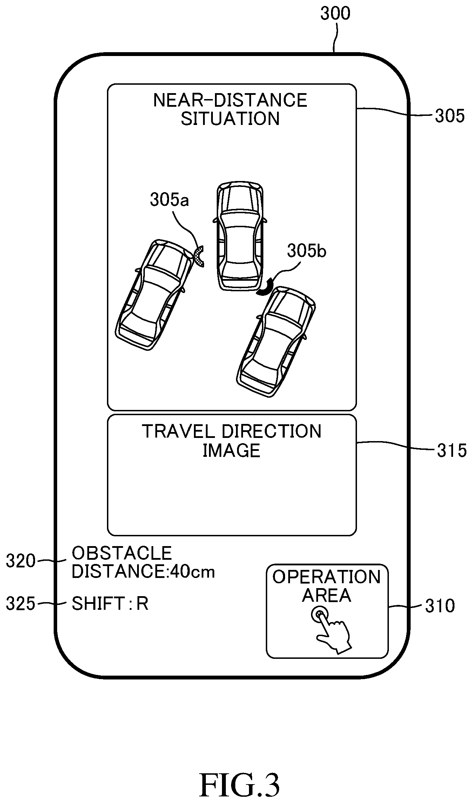

While the remote driving control is being executed, the remote operation apparatus 20 displays a control screen on the display device 66. The control screen includes an operation area (referring to a symbol 215 in FIG. 2 and a symbol 310 in FIG. 3). When the user performs a predetermined operation on the operation area, the remote operation apparatus 20 transmits the driving instruction to the remote driving control apparatus 10. When the remote driving control apparatus 10 receives the driving instruction, the remote driving control apparatus 10 automatically drives the vehicle VA. While the remote driving control apparatus 10 is automatically driving the vehicle VA, the remote driving control apparatus 10 controls the powertrain actuator 46, the brake actuator 48, and the steering motor 50 so that the vehicle VA travels along a route to the target space. Furthermore, the remote driving control apparatus 10 recognizes the object based on the front image (and/or the rear image) and the sonar data, and controls the powertrain actuator 46, the brake actuator 48, and the steering motor 50 to avoid the vehicle VA from colliding with the object.

An approach possibility that the vehicle VA approaches an obstacle changes depending on a progress of the remote driving control. In the remote leaving control, the approach possibility is high in a leaving control, where the vehicle VA actually leaves the parking space, and the approach possibility is low in a moving control, where the vehicle VA moves to the target space after leaving the parking space. In the remote parking control, the approach possibility is low in a moving control, where the vehicle VA moves to the vicinity of the target space, and the approach possibility is high in a parking control, where the vehicle VA actually parks in the target space. A zone where the approach possibility is low is referred to as a first zone, and a zone where the approach possibility is high is referred to as a second zone. A position where the control is switched is referred to as a switching position. The route to the target space is divided into the first zone and the second zone at the switching position.

When the approach possibility changes, the information that a user wants to know also changes. More specifically, the user tends to want to know a progress of the remote driving control when the approach possibility is low, and the user tends to want to know the position of the obstacle when the approach possibility is high.

For this reason, in the present embodiment, the remote driving control apparatus 10 changes information displayed on the control screen according to the progress of the remote driving control. Specifically, a progress screen (a first control screen) 200 shown in FIG. 2 is displayed as the control screen when the vehicle VA travels in the first zone, and an obstacle screen (a second control screen) 300 shown in FIG. 3 is displayed as the control screen when the vehicle VA travels in the second zone. The progress screen 200 includes at least progress information representing the progress of the remote driving control. The obstacle screen 300 includes alerting information for alerting the user to the obstacle whose distance D to the vehicle VA is equal to or shorter than a first threshold distance D1th. According to the present embodiment, the information that the user wants to know is displayed on the control screen.

### <Progress screen 200>

Referring to FIG. 2, the progress screen 200 is described. The progress screen 200 includes a surrounding situation display area 205, a route progress display area 210, an operation area 215, a remaining distance display area 220, and a vehicle speed display area 225.

The surrounding situation display area 205 represents a travel direction of the vehicle VA, a travel area of the vehicle VA, and the object that is located around the vehicle VA.

The route progress display area 210 represents a traveled route 210a that the vehicle VA has already traveled and an untraveled route 210b that the vehicle VA has not yet traveled. The user can grasp the progress of the remote driving control by checking the traveled route 210a and the untraveled route 210b.

The operation area 215 is an area where the user performs a predetermined operation to cause the remote operation apparatus 20 to transmit the driving instruction.

The remaining distance display area 220 represents a remaining distance to the target space. The user can grasp the progress of the remote driving control by checking the remaining distance. The vehicle speed display area 225 represents the vehicle speed Vs.

### <Obstacle screen 300>

Referring to FIG. 3, the obstacle screen 300 is described. At least the above alerting information is displayed on the obstacle screen 300. The obstacle screen 300 includes a near-distance situation display area 305, an operation area 310, a travel direction image display area 315, an obstacle distance display area 320, and a shift position display area 325.

If there is no obstacle whose distance D is equal to or shorter than the first threshold distance D1th, an overhead image is displayed in the near-distance situation display area 305. The overhead image is an image of a scenery around the vehicle VA from directly above the vehicle VA. If there is the obstacle whose distance D is equal to or shorter than the first threshold distance D1th, the above alerting information is displayed superimposed on the overhead image in the near-distance situation display area 305. In more detail, if there is the obstacle whose distance D is longer than a second threshold distance D2th and equal to or shorter than the first threshold distance D1th, a first alerting display element 305a is displayed in the direction of the obstacle. The second threshold distance is shorter than the first threshold distance D1th. If there is the obstacle whose distance D is equal to or shorter than the second threshold distance D2th, a second alerting display element 305b is displayed in the direction of the obstacle. The second warning display element 305b is displayed in a way that draws the user's attention more than the first alerting display element 305a.

The operation area 310 is the same as the above described operation area 215, so this explanation is omitted.

An image of a scenery in a travel direction in which the vehicle VA is traveling is displayed in the travel direction image display area 315. In more detail, when a shift position is either a forward position or a neutral position, the front image is displayed in the travel direction image display area 315, and when the shift position is a reverse position, the rear image is displayed in the travel direction image display area 315.

The distance D of the obstacle closest to the vehicle VA is displayed in the obstacle distance display area 320.

The current shift position is displayed in the shift position display area 325.

### <Operation Example>

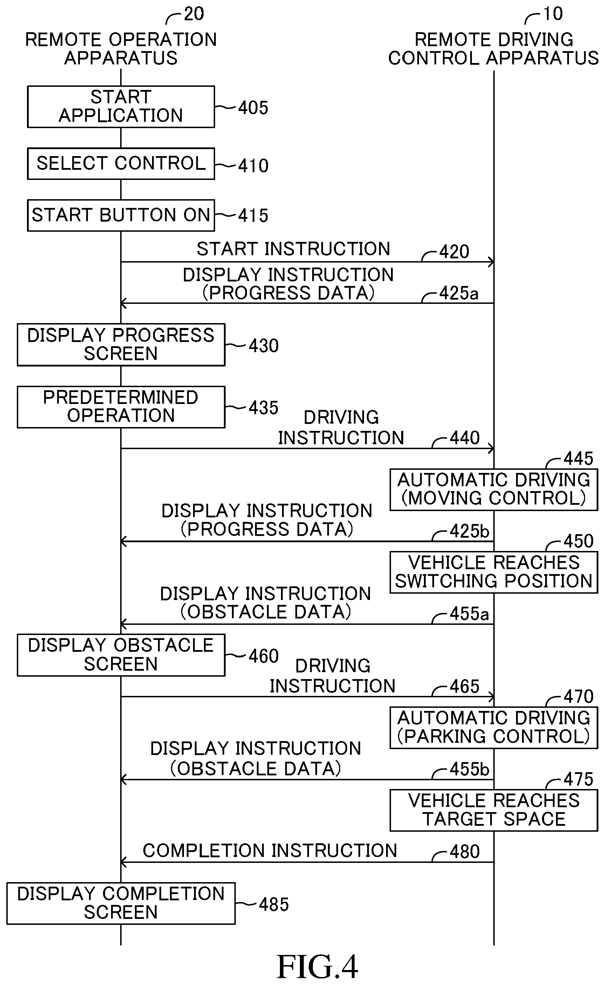

Referring to FIG. 4, an operation example of the vehicle control system of the present embodiment is described.

When the user operates the remote operation apparatus 20 to start a remote driving control application (405), the user selects whether to execute a remote leaving control or a remote parking control (410). In the present example, it is assumed that the remote parking control is selected. If necessary, the user designates the target space. When the user operates a start button (not shown) displayed on the display device 66 (415), the remote operation apparatus 20 transmits a start instruction to the remote driving control apparatus 10 (420). The start instruction that is transmitted when the remote leaving control is selected is referred to as a "leaving start instruction", and the start instruction that is transmitted when the remote parking control is selected is referred to as a "parking start instruction". The start instruction includes data that can identify the target space.

When the remote driving control apparatus 10 receives the start instruction, the remote driving control apparatus 10 sets the route to the target space by referring to the parking lot map data. Furthermore, the remote driving control apparatus 10 transmits a display instruction to the remote operation apparatus 20 at predetermined intervals after a time at which the start instruction is received (425a, 425b, 455a, 455b).

When the remote parking control is executed, the vehicle VA travels in the first zone immediately after the remote parking control is started, so the progress screen 200 is displayed. For this reason, the remote driving control apparatus 10 transmits the display instruction that includes progress data necessary for displaying the progress screen 200. The progress data includes the following data.
- Travel area data that represents the travel area of the vehicle VA
- Object data that represents the position and a type of the object identified by the front image and the rear image
- Travel direction data that represents the travel direction of the vehicle VA identified based on the shift position and the steered angle of the vehicle VA
- Route data that represents the route that is set when the remote driving control is started
- Position history data that represents a history of the current position of the vehicle VA identified by the GNSS receiver 40
- Remaining distance data that represents the remaining distance
- Vehicle speed data that represents the vehicle speed Vs

When the remote leaving control is executed, the vehicle VA travels in the second zone immediately after the remote leaving control is started, so the obstacle screen 300 is displayed. For this reason, the remote driving control apparatus 10 transmits a display instruction that includes obstacle data necessary for displaying the obstacle screen 300. The obstacle data includes the following data.
- Overhead image
- Position data that represents the distance D and the position of the obstacle whose distance D is equal to or shorter than the first threshold distance D1th
- Travel direction image that represents the image corresponding to the travel direction of the vehicle between the front image and the rear image

- Distance data that represents the minimum distance D
- Shift position data that represents the shift position

The remote driving control apparatus 10 comprises a left camera and a right camera, which are not shown. The left camera acquires a left image by capturing a scenery on the left side of the vehicle VA. The right camera acquires a right image by capturing a scenery on the right side of the vehicle VA. The remote driving control apparatus 10 generates the overhead image based on the front image, the rear image, the left image, and the right image.

If there is no obstacle whose distance D is equal to or shorter than the first threshold distance D1th, the obstacle data does not include the position data and the distance data. The first threshold distance D1th is set to a value smaller than the distance at which the sonar 36 can detect the object. The remote driving control apparatus 10 determines whether or not there is the obstacle whose distance D is equal to or shorter than the first threshold distance D1th based on the sonar data.

When the remote operation apparatus 20 receives the display instruction including the progress data, the remote operation apparatus 20 displays the progress screen 200 on the display device 66 (430). When the user performs the predetermined operation on the operation area 215 of the progress screen 200 (435), the remote operation apparatus 20 transmits the driving instruction (440).

As long as the remote driving control apparatus 10 receives the driving instruction, the remote driving control apparatus 10 executes an automatic driving control to automatically drive the vehicle VA along the route (445). In the remote parking control, the remote driving control apparatus 10 executes the moving control to move the vehicle VA to the vicinity of the target space as the automatic driving control before the vehicle VA reaches the switching position. The switching position is the position at which the remote parking control switches from the moving control to the parking control, and the remote leaving control switches from the leaving to the moving control. The switching position is set when the route to the target space is set.

After a time point at which the vehicle VA reaches the switching position (450), the remote driving control apparatus 10 transmits the display instruction including the obstacle data to the remote operation apparatus 20 (455a, 455b), every time a predetermined time has elapsed. When the remote operation apparatus 20 receives the display instruction including the obstacle data, the remote operation apparatus 20 ends displaying the progress screen 200 and displays the obstacle screen 300 (460). When the user performs the predetermined operation on the operation area 310 of the obstacle screen 300, the remote operation apparatus 20 transmits the driving instruction to the remote driving control apparatus 10 (465). When the remote driving control apparatus 10 receives the driving instruction, the remote driving control apparatus 10 executes the parking control to actually park the vehicle VA in the target space as the automatic driving control (470).

When the vehicle VA reaches the target space (475), the remote driving control apparatus 10 transmits a completion instruction to the remote operation apparatus 20 (480). When the remote operation apparatus 20 receives the completion instruction, the remote operation apparatus 20 ends displaying the obstacle screen 300 and displays a completion screen (not shown) to inform the user that the vehicle VA has reached the target space (485).

In a case where the remote parking control is executed as the remote driving control, the progress screen 200 is displayed as the control screen on the display device 66 of the remote operation apparatus 20 until the vehicle VA reaches the switching position, and the obstacle screen 300 is displayed as the control screen after the vehicle VA reaches the switching position. The user can know the information that the user wants to know, which changes in accordance with the progress of the remote driving control, by seeing the control screen.

### (Specific operation)

The CPU of the ECU 30 of the remote driving control apparatus 10 executes routines shown in flowcharts in FIG. 3 to FIG. 7, each time a predetermined time has elapsed. Hereinafter, the CPU of the ECU 30 is referred to as a "first CPU".

### <Start determination routine>

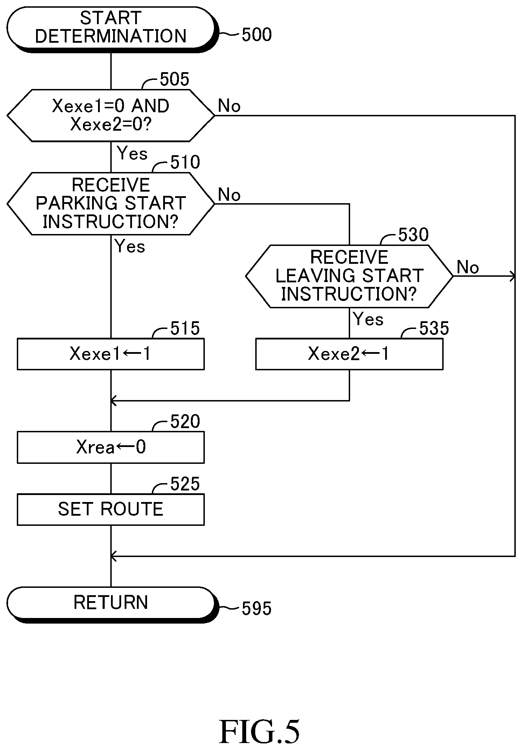

When an appropriate time comes, the CPU starts a process from step 500 of FIG. 5, and at step 505 the CPU determines whether or not both a first execution flag Xexe1 and a second execution flag Xexe2 are "0".

The first execution flag Xexe1 is set to "1" when the remote parking control is started, and set to "0" when the remote parking control is ended. The second execution flag Xexe2 is set to "1" when the remote leaving control is started, and set to "0" when the remote leaving control is ended. Furthermore, both the first execution flag Xexe1 and the second execution flag Xexe2 are set to "0" in an initialization routine. The initialization routine is executed by the first CPU when an ignition key switch of the vehicle VA is changed from an off position to an on position.

When both the first execution flag Xexe1 and the second execution flag Xexe2 are "0", the first CPU makes a "Yes" determination at step 505, and the process proceeds to step 510. At step 510, the CPU determines whether or not the remote driving control apparatus 10 receives the parking start instruction.

When the remote driving control apparatus 10 receives the parking start instruction, the first CPU makes a "Yes" determination at step 510 and executes steps 515 to 525.

Step 515: The first CPU sets the first execution flag Xexe1 to "1".

Step 520: The first CPU sets a reach flag Xrea to "0".

The reach flag Xrea is set to "1" when the vehicle VA reaches the switching position, and is set to "0" when the remote driving control is started. The reach flag Xrea is set to "0" in the initialization routine.

Step 525: The first CPU sets the route to the target space.

Thereafter, the process proceeds to step 595, and the first CPU terminates the present routine tentatively.

In a case where the remote driving control apparatus 10 does not receive the parking start instruction when the process proceeds to step 510, the first CPU makes a "No" determination at step 510 and the process proceeds to step 530. At step 530, the first CPU determines whether or not the remote driving control apparatus 10 receives the leaving start instruction.

When the remote driving control apparatus 10 receives the leaving start instruction, the first CPU makes a "Yes" determination at step 530 and the process proceeds to step 535. At step 535, the first CPU sets the second execution flag Xexe2 to "1". Thereafter, the first CPU executes steps 520 and 525, and the process proceeds to step 595. At step 595, the first CPU terminates the present routine tentatively.

When the remote driving control apparatus 10 does not receive the leaving start instruction, the first CPU makes a "No" determination at step 530, and the process proceeds to step 595. At step 595, the first CPU terminates the present routine tentatively.

### <Remote parking control routine>

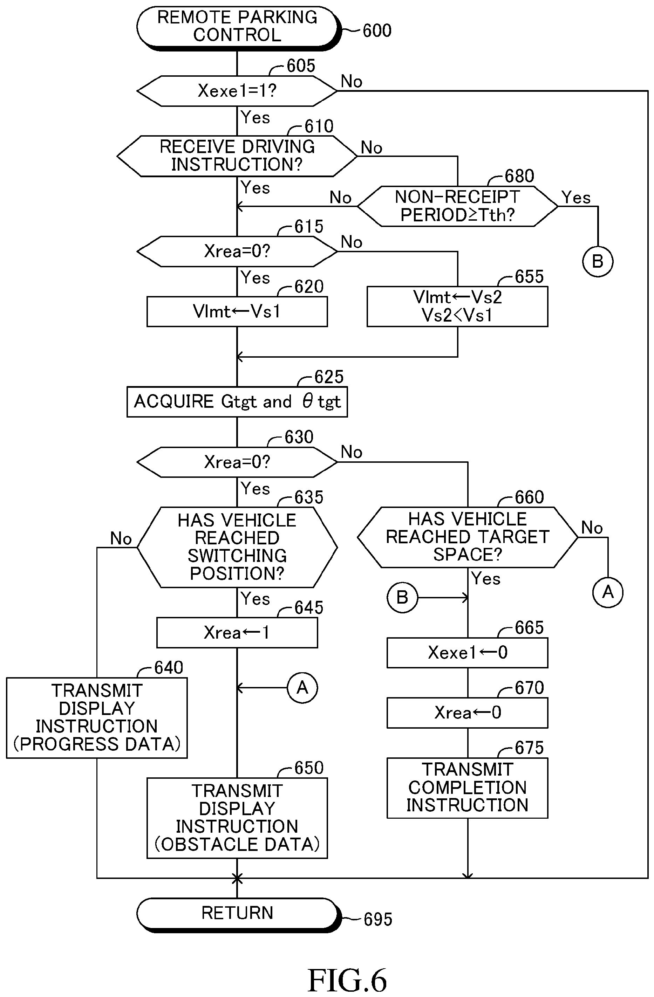

When an appropriate time comes, the CPU starts a process from step 600 of FIG. 6, and at step 605 the CPU determines whether or not the first execution flag Xexe1 is "0". When the first execution flag Xexe1 is "0", the first CPU makes a "No" determination at step 605, and the process proceeds to step 695. At step 695, the first CPU terminates the present routine tentatively.

When the first execution flag Xexe1 is "1", the first CPU makes a "Yes" determination at step 605, and the process proceeds to step 610. At step 610, the first CPU determines whether or not the remote driving control apparatus 10 receives the driving instruction.

When the remote driving control apparatus 10 receives the driving instruction, the first CPU makes a "Yes" determination at step 610, and the process proceeds to step 615. At step 615, the first CPU determines whether or not the reach flag Xrea is "0".

When the reach flag Xrea is "0", the first CPU makes a "Yes" determination at step 615 and executes steps 620 to 630.

Step 620: The first CPU sets a limit vehicle speed Vlmt to a first vehicle speed Vs1.

Step 625: The first CPU acquires a target acceleration Gtgt and a target steered angle θtgt such that the vehicle speed Vs does not exceed the limit speed Vlmt and the vehicle VA travels along the route.

In the remote parking control, the moving control is executed when the reach flag Xrea is "0", and the parking control is executed when the reach flag Xrea is "1".

The first CPU controls the powertrain actuator 46 and the brake actuator 48 so that the acceleration G matches the target acceleration Gtgt. Furthermore, the first CPU controls the steering motor 50 so that the steered angle θ matches the target steered angle θtgt.

Step 630: The first CPU determines whether or not the reach flag Xrea is "0".

When the reach flag Xrea is "0", the first CPU makes a "Yes" determination at step 630 and the process proceeds to step 635. At step 635, the first CPU determines whether or not the vehicle VA has reached the switching position.

When the vehicle VA has not yet reached the switching position, the first CPU makes a "No" determination at step 635 and the process proceeds to step 640. At step 640, the first CPU transmits the display instruction including the progress data to the remote operation apparatus 20. Thereafter, the process proceeds to step 695 and the first CPU terminates the present routine tentatively.

In a case where the vehicle VA has reached the switching position when process proceeds to step 635, the first CPU makes a "Yes" determination at step 635 and executes steps 645 and 650.

Step 645: The first CPU sets the reach flag Xrea to "1".

Step 650: The first CPU transmits the display instruction including the obstacle data to the remote operation apparatus 20.

Thereafter, the process proceeds to step 695, and the first CPU terminates the present routine tentatively.

When the process proceeds to step 615 after the reach flag Xrea is set to "1", the first CPU makes a "No" determination at step 615 and the process proceeds to step 655. At step 655, the first CPU sets the limit vehicle speed Vlmt to a second vehicle speed Vs2. The second vehicle speed Vs2 is set to a value lower than the first vehicle speed Vs1. Thereafter, the process proceeds to step 625, and the first CPU acquires the target acceleration Gtgt and the target steered angle θtgt. As described above, when the reach flag Xrea is "1", the parking control is executed. The limit speed Vlmt (Vs2) of the parking control is lower than the limit speed Vlmt (Vs1) of the moving control. Thereafter, the process proceeds to step 630. Since the reach flag Xrea is set to "1", the first CPU makes a "No" determination at step 630, and the process proceeds to step 660.

At step 660, the first CPU determines whether or not the vehicle VA has reached the target space. When the vehicle VA has not yet reached the target space, the first CPU makes a "No" determination at step 660 and executes step 650. Thereafter, the process proceeds to step 695, and the first CPU terminates the present routine tentatively.

In a case where the vehicle VA has reached the target space when the process proceeds to step 660, the first CPU makes a "Yes" determination at step 660 and executes steps 665 to 675.

Step 665: The first CPU sets the first execution flag Xexe1 to "0".

Step 670: The first CPU sets the reach flag Xrea to "0".

Step 675: The first CPU transmits the completion instruction to the remote operation apparatus 20.

Thereafter, the process proceeds to step 695, and the first CPU terminates the present routine tentatively.

In a case where the remote driving control apparatus 10 does not receive the driving instruction when the process proceeds to step 610, the first CPU makes a "No" determination at step 610, and the process proceeds to step 680. At step 680, the first CPU determines whether or not a non-receipt period T, during which the remote driving control apparatus 10 has not received the driving instruction, is equal to or longer than a threshold time Tth.

When the non-receipt period T is shorter than the threshold time Tth, the first CPU makes a "No" determination at step 680, and the process proceeds to step 615. When the non-receipt period T is equal to or longer than the threshold time Tth, the first CPU makes a "Yes" determination at step 680, and the process proceeds to step 665.

### <Remote leaving control routine>

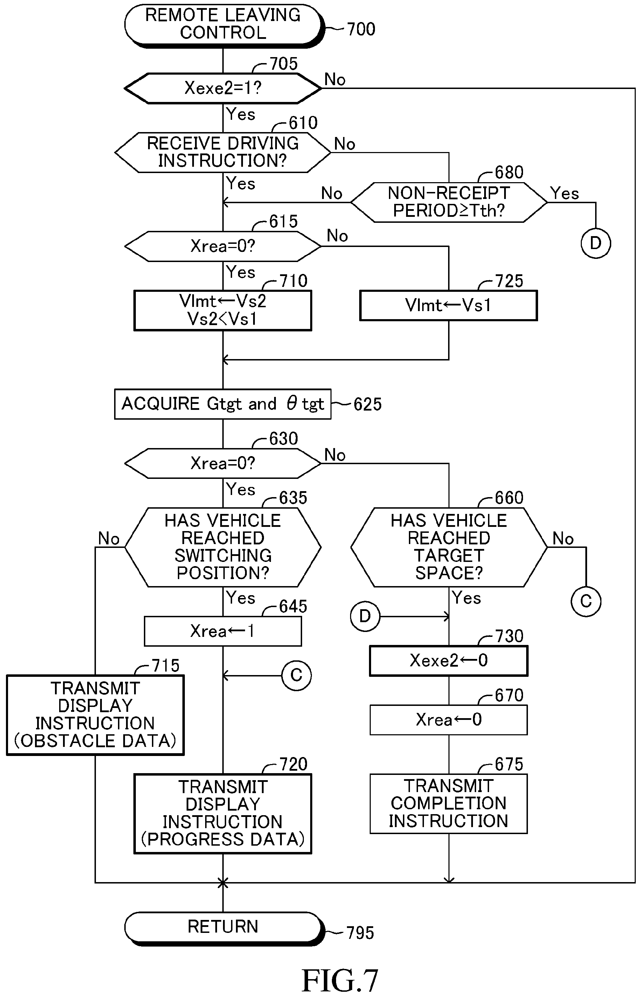

In a remote leaving control routine shown in FIG. 7, the same symbols are used for the same processes as in the remote parking control routine shown in FIG. 6, and the explanation of these processes is omitted.

When an appropriate time comes, the CPU starts a process from step 700 of FIG. 7, and at step 705 the CPU determines whether or not the second execution flag Xexe2 are "0". When the second execution flag Xexe2 is "0", the first CPU makes a "No" determination at step 705, and the process proceeds to step 795. At step 795, the first CPU terminates the present routine tentatively.

When the second execution flag Xexe2 is "0" ("Yes" at step 705), the remote driving control apparatus 10 receives the driving instruction ("Yes" at step 610 in FIG. 7), and the reach flag Xrea is "0" ("Yes" at step 615 in FIG. 7), the process proceeds to step 710. At step 710, the first CPU sets the limit vehicle speed Vlmt to the second vehicle speed Vs2. Thereafter, the first CPU executes steps 625 and 630 in FIG. 7. In the remote leaving control, the leaving control is executed when the reach flag Xrea is "0", and the moving control is executed when the reach flag Xrea is "1".

When the reach flag Xrea is "0" ("Yes" at step 630 in FIG. 7) and the vehicle VA has not yet reached the switching position ("No" at step 635 in FIG. 7), the process proceeds to step 715. At step 715, the first CPU transmits the display instruction including the obstacle data to the remote operation apparatus 20. Thereafter, the process proceeds to step 795, and the first CPU terminates the present routine tentatively.

When the vehicle VA has reached the switching position ("Yes" at step 635 in FIG. 7), the first CPU executes steps 645 and 720 in FIG. 7.

Step 720: The first CPU transmits the display instruction including the progress data to the remote operation apparatus 20.

Thereafter, the process proceeds to step 795, and the first CPU terminates the present routine tentatively.

In a case where the reach flag Xrea is "1" ("No" at step 615 in FIG. 7) when the process proceeds to step 615 in FIG. 7, the process proceeds to step 725. At step 725, the first CPU sets the limit vehicle speed Vlmt to the first vehicle speed Vs1. Thereafter, the process proceeds to step 625 in FIG. 7. As described above, the moving control is executed when the reach flag Xrea is "1", so the limit vehicle speed Vlmt (Vs2) of the leaving control is lower than the limit vehicle speed Vlmt (Vs1) of the moving control.

In a case where the reach flag Xrea is "1" ("Yes" at step 630 in FIG. 7) when the process proceeds to step 630 in FIG. 7, the process proceeds to step 660 in FIG. 7. When the vehicle VA has not yet reached the target space ("No" at step 660 in FIG. 7), the first CPU executes step 720. Thereafter, the process proceeds to step 795, and the first CPU terminates the present routine tentatively.

In a case where the vehicle VA has reached the target space ("Yes" at step 660 in FIG. 7) when the process proceeds to step 660 in FIG. 7, the process proceeds to step 730, and the first CPU sets the second execution flag Xexe2 to "0".

Thereafter, the first CPU executes steps 670 and 675 in FIG. 7, and the process proceeds to step 795. At step 795, the first CPU terminates the present routine tentatively.

In a case where the remote driving control apparatus 10 does not receive the driving instruction ("No" at step 610 in FIG. 7) when the process proceeds to step 610, if the non-receipt period T is shorter than the threshold time Tth ("No" at step 680 in FIG. 7), the process proceeds to step 615 in FIG. 7. On the other hand, if the non-receipt period T is equal to or longer than the threshold time Tth ("Yes" at step 680 in FIG. 7), the process proceeds to step 730.

### <Screen display routine>

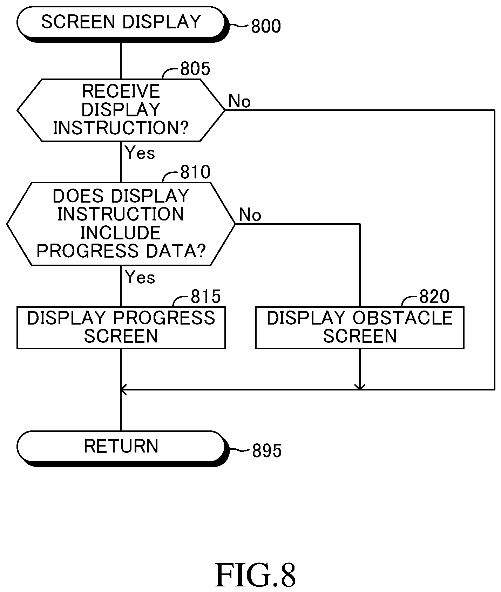

The CPU of the control unit 60 of the remote operation apparatus 20 executes a routine shown in the flowchart in FIG. 8, each time a predetermined time has elapsed. Hereinafter, the CPU of the control unit 60 is referred to as a "second CPU".

When an appropriate time comes, the second CPU starts a process from step 800 in FIG. 8, and at step 805, the second CPU determines whether or not the remote operation apparatus 20 receives the display instruction.

When the remote operation apparatus 20 receives the display instruction, the second CPU makes a "Yes" determination at step 805, and the process proceeds to step 810. At step 810, the second CPU determines whether or not the display instruction includes the progress data.

When the display instruction includes the progress data, the second CPU makes a "Yes" determination at step 810, and the process proceeds to step 815. At step 815, the second CPU displays the progress screen 200 on the display device 66.

In more detail, the second CPU generates an image displayed in the surrounding situation display area 205 of the progress screen 200 based on the travel area data, the object data, and the travel direction data included in the progress data. In addition, the control unit 60 has pre-stored an object image corresponding to the type of the object, and the second CPU displays the object image corresponding to the type of the object in the surrounding situation display area 205. As a result, since the remote driving control apparatus 10 need not to transmit the image of the object with large data volume, a data volume of a communication between the remote driving control apparatus 10 and the remote operation apparatus 20 can be reduced.

Furthermore, the second CPU identifies the traveled route 210a and the untraveled route 210b based on the route data and the position history data, and displays the traveled route 210a and the untraveled route 210b in the route progress display area 210. Furthermore, the second CPU displays the remaining distance in the remaining distance display area 220 based on the remaining distance data. Furthermore, the second CPU displays the vehicle speed Vs in the vehicle speed display area 225 based on the vehicle speed data.

Thereafter, the process proceeds to step 895, and the second CPU terminates the present routine tentatively.

When the display instruction does not include the progress data (i.e. the display instruction includes the obstacle data), the second CPU makes a "No" determination at step 810 and the process proceeds to step 820. At step 820, the second CPU displays the obstacle screen 300 on the display device 66. Thereafter, the process proceeds to step 895 and the second CPU terminates the present routine tentatively.

In more detail, the second CPU displays the overhead image included in the obstacle data in the near-distance situation display area 305 of the obstacle screen 300. When the obstacle data includes the position data, the second CPU displays the alerting information superimposed on the overhead image in order to draw the user's attention to the position of the obstacle represented by the position data. Specifically, when the distance D represented by the position data is longer than the second threshold distance D2th and equal to or shorter than the first threshold distance D1th, the second CPU displays the first alerting display element 305a towards the obstacle, and when the distance D represented by the position data is equal to or shorter than the second threshold distance D2th, the second CPU displays the second alerting display element 305b towards the obstacle.

Furthermore, the second CPU displays the travel direction image included in the obstacle data in the travel direction image display area 315. Furthermore, when the obstacle data includes the distance data, the second CPU displays the minimum distance D represented by the distance data in the obstacle distance display area 320. Furthermore, the second CPU displays the shift position represented by the shift position data included in the obstacle data in the shift position display area 325.

When the remote operation apparatus 20 does not receive the display instruction, the second CPU makes a "No" determination at step 805, and the process proceeds to step 895, and the second CPU terminates the present routine tentatively.

According to the present embodiment, in a case where the remote driving control is being executed, the progress screen 200 is displayed when vehicle VA travels in a zone where the approach possibility is low, and the obstacle screen 300 is displayed when the vehicle VA travels in a zone where the approach possibility is high. The vehicle control system can display the control screen that includes the request information that changes according to the progress of the remote driving control.

### (First modification example)

In the above embodiment, when the remote driving control apparatus 10 transmits the display instruction including the obstacle data, the remote driving control apparatus 10 determines whether or not there is the obstacle whose distance D is equal to or shorter than the first threshold distance D1th based on the sonar data. In the present modification example, the remote driving control apparatus 10 may determine whether or not there is the obstacle whose distance D is equal to or shorter than the first threshold distance D1th based on the front image and the rear image.

### (Second modification example)

In the above embodiment, when the remote driving control apparatus 10 transmits the display instruction including the obstacle data, the remote driving control apparatus 10 determines whether or not there is the obstacle whose distance D is equal to or shorter than the first threshold distance D1th, and transmits the obstacle data including the position data representing the distance D and the position of the obstacle whose distance D is equal to or shorter than the first threshold distance D1th. For example, the remote driving control apparatus 10 may transmit the obstacle data including the sonar data, and the remote operation apparatus 20 may determine whether or not there is the obstacle whose distance D is equal to or shorter than the first threshold distance D1th.

The remote driving control apparatus 10 may be applied to (or installed in/on) an engine vehicle, a hybrid electric vehicle (HEV), a plug-in hybrid electric vehicle (PHEV), a fuel cell electric vehicle (FCEV), and a battery electric vehicle (BEV). Furthermore, the remote driving control is a kind of automatic driving.

## Claims

1. A remote driving control apparatus (10) configured to execute a remote driving control for driving a vehicle to a target space according to a driving instruction from a remote operation apparatus (20) operated by a user outside the vehicle (step 600 to step 695, step 700 to step 795),
wherein,
the remote driving control apparatus (10) is configured to:
display a control screen (200, 300) including information about the remote driving control on a display device (66) of the remote operation apparatus (step 640, step 650, step 740, step 750) when the remote driving control is executed ("Yes" at step 605, "Yes" at step 705); and
change content of the control screen (200, 300) according to a progress of the remote driving control (step 640, step 650, step 740, step 750, step 815, step 820).

2. The remote driving control apparatus (10) according to claim 1,
wherein,
the remote driving control apparatus (10) is configured to:
drive the vehicle along a route to the target space in the remote driving control (step 625).,
the route being divided into a first zone where an approach possibility that the vehicle approaches an obstacle is low and a second zone where the approach possibility is high at a switching position;
display a first control screen (200) as the control screen on the display device (step 640, step 720), when the vehicle travels in the first zone ("No" at step 635, "No" at step 630 shown in FIG. 7); and
display a second control screen (300) which varies from the first control screen (200) as the control screen on the display device (step 650, step 715), when the vehicle travels in the second zone ("No" at step 630, "No" at step 635 shown in FIG. 7).

3. The remote driving control apparatus (10) according to claim 2,
wherein,
the remote driving control apparatus is configured to:
display the first control screen (200) including a progress information (210, 220) that represents a progress of the remote driving control (step 815), when the vehicle travels in the first zone ("No" at step 635, "No" at step 630 shown in FIG. 7); and
display the second control screen (300) including an alerting information (305a, 305b) that alerts a driver to the obstacle whose distance to the vehicle is equal to or shorter than a threshold distance (step 820), when the vehicle travels in the second zone ("No" at step 630, "No" at step 635 shown in FIG. 7).

4. The remote driving control apparatus (10) according to claim 2 or 3,
wherein,
the remote driving control apparatus is configured to display the first control screen (200) including at least one of a route information (210) and a remaining distance information (220) as the progress information,
the route information (210) representing a traveled route that the vehicle has already traveled and an untraveled route that the vehicle has not traveled yet,
the remaining distance information representing a remaining distance to the target space.

5. The remote driving control apparatus (10) according to claim 3,
wherein,
the remote driving control apparatus is configured to display the alerting information (305a, 305b) superimposed on an overhead image of an area around the vehicle in the second control screen (300).

6. The remote driving control apparatus (10) according to any one of claims 2 to 5,
wherein,
the remote driving control apparatus is configured to:
execute, as the remote driving control, a moving control for moving the vehicle to a vicinity of the target space (step 625) before the vehicle reaches the switching position ("No" at step 635);
execute, as the remote driving control, a parking control for parking the vehicle in the target space (step 625) after the vehicle reaches the switching position ("No" at step 630);
determine that the vehicle travels in the first zone (step 640) when the moving control is executed; and
determine that the vehicle travels in the second zone (step 650) when the parking control is executed.

7. The remote driving control apparatus (10) according to claim 6,
wherein,
the remote driving control apparatus is configured to drive the vehicle such that a vehicle speed does not exceed a limit vehicle speed (step 625), when the remote driving control is executed,
wherein,
the limit vehicle speed of the parking control is set to a lower value than the limit vehicle speed of the moving control (step 655).

8. The remote driving control apparatus (10) according to any one of claims 2 to 7,
the remote driving control apparatus is configured to:
execute, as the remote driving control, a leaving control for leaving the vehicle from a parking space (step 625 shown in FIG. 7) from a time at which the remote driving control starts to a time at which the vehicle reaches the switching position ("No" at step 635 shown in FIG. 7);
execute, as the remote driving control, a moving control for moving the vehicle to the target space (step 625 shown in FIG. 7) after the vehicle reaches the switching position ("No" at step 630 shown in FIG. 7);
determine that the vehicle travels in the second zone (step 715) when the leaving control is executed; and
determine that the vehicle travels in the first zone (step 720) when the moving control is executed.

9. The remote driving control apparatus (10) according to claim 8,
wherein,
the remote driving control apparatus is configured to drive the vehicle such that a vehicle speed does not exceed a limit vehicle speed (step 625 shown in FIG. 7), when the remote driving control is executed,
wherein,
the limit vehicle speed of the leaving control is set to a lower value than the limit vehicle speed of the moving control (step 710).

10. A remote operation apparatus (20) configured to transmit a driving instruction to the vehicle when a user outside the vehicle operates the remote operation apparatus (440, 465),
wherein,
the vehicle executes a remote driving control for traveling to a target space according to the driving instruction (step 600 to step 695, step 700 to step 795),
wherein,
the remote operation apparatus(20) is configured to:
display a control screen (200, 300) including information about the remote driving control on a display device (66) of the remote operation apparatus (20), when the vehicle executes the remote driving control; and
change content of the control screen according to a progress of the remote driving control (step 815, step 820).
